# EUROPÄISCHE PATENTSCHRIFT

(11) **EP 1 510 277 B1**
(45) Veröffentlichungstag und Bekanntmachung des Hinweises auf die Patenterteilung: **31.03.2010**
(21) Anmeldenummer: 04020171.7
(22) Anmeldetag: 25.08.2004
(51) Int. Cl.: B23K 11/11, B23K 11/31

(54) **Schweisszange**
Welding gun
Pince de soudage

(30) Priorität: 28.08.2003 DE 20313459 U
(43) Veröffentlichungstag der Anmeldung: 02.03.2005
(73) Patentinhaber: Firma Wilhelm Roell, 36166 Haunetal - Wehrda (DE)
(72) Erfinder: Röll, Wilhelm, 36166 Haunetal/Wehrda (DE); Viebrock, Johannes, 36041 Fulda (DE)
(74) Vertreter: Buchhold, Jürgen

(56) Entgegenhaltungen:
- EP-A- 0 838 299
- FR-A- 975 635
- US-A- 5 336 865
- PATENT ABSTRACTS OF JAPAN Bd. 0175, Nr. 74 (M-1498), 19. Oktober 1993 (1993-10-19) & JP 5 169277 A (TOYOTA MOTOR CORP), 9. Juli 1993 (1993-07-09)
- PATENT ABSTRACTS OF JAPAN Bd. 0184, Nr. 18 (M-1650), 5. August 1994 (1994-08-05) & JP 6 126468 A (NILES PARTS CO LTD), 10. Mai 1994 (1994-05-10)

## Beschreibung

Die Erfindung betrifft eine Schweißzange gemäß dem Oberbegriff von Anspruch 1.

Bei bekannten Schweißzangen besteht der Nachteil, daß die Abnutzung der Schweißelektroden, die dann auszuwechseln oder nachzubearbeiten sind, zu langen Betriebsunterbrechungen führen kann, was teuer und zeitaufwendig ist.

Der vorliegenden Erfindung liegt deshalb die Aufgabe zugrunde, eine zum Punktschweißen von Blechflanschen dienende Schweißzange zu schaffen, die wesentlich längere Betriebszeiten ermöglicht, und zwar ohne Betriebsunterbrechungen bzw. nur mit sehr kurzen Stillstandszeiten.

Hauptmerkmale der Erfindung sind in Anspruch 1 angegeben. Ausgestaltungen sind Gegenstand der Ansprüche 2 bis 23.

Bei einer gattungsgemäßen Schweißzange zum elektrischen Punktschweißen von sich überlappenden und elektrisch berührenden Blechflanschen mit zwei relativ zueinander beweglichen, elektrisch leitenden Zangenarmen, an deren freien Enden elektrisch leitende Elektrodenhalter mit im Schweißbetrieb die zu verschweißenden Blechflansche beidseitig berührenden Schweißelektroden gehalten sind, ist jeder Elektrodenhalter stufenweise drehbar gehalten und weist wenigstens zwei in Drehrichtung versetzt angeordnete Schweißelektroden auf, wobei in jeder Drehstufe der Elektrodenhalter jeweils zwei in Schweißposition befindliche Schweißelektroden der beiden Elektrodenhalter einander benachbart sind.

Hierdurch können nach Abnutzung der gerade benutzten beiden Schweißelektroden durch einfaches drehendes Weiterschalten der zugeordneten Elektrodenhalter sehr schnell zwei neue, noch unbenutzte Schweißelektroden zur Verfügung gestellt werden. Dieser Umschaltvorgang kann während des Weiterbewegens der Schweißzange zu einem nächsten Schweißpunkt erfolgen, so daß er zeitlich kaum spürbar ist. Es können praktisch beliebig viele Schweißelektroden zur Verfügung stehen, die einen langzeitig unterbrechungsfreien Punktschweißbetrieb sicherstellen.

Eine derartige Schweißzange ist in der JP-A-05169277 offenbart.

Erfindungsgemäß umfassen die Schweißelektroden eine längliche Form, die namentlich in Drehrichtung der Elektrodenhalter langgestreckt und im Querschnitt rechteckig, oval oder elliptisch sein können, insbesondere zum Punktschweißen besonders schmaler Blechflansche. Dies führt zu erheblichen Vorteilen bezüglich Materialverbrauch und Raumausnutzung des geschweißten Produkts.

Bei einer bevorzugten Weiterbildung sind die Drehachsen der Elektrodenhalter zumindest im Schweißbetrieb etwa parallel zueinander und rechtwinklig zur Längseerstreckung der zu verschweißenden Blechflansche ausgerichte. So können die durch Punktschweißen erzeugten Schweißflächen (Schweißpunkte) dicht an die Wurzel der zu verschweißenden Blechflansche angenähert werden, wodurch das Schweißen relativ schmaler Flansche ermöglicht wird.

Wenn jeweils mehr als zwei Schweißelektroden in Drehrichtung eines jeden Elektrodenhalters angeordnet und diese zwischen in Drehrichtung benachbarten Schweißelektroden drehverstellbar sind, kann man ein besonders schnelles Wechseln der in Schweißposition zu bringenden benachbarten Schweißelektroden am Elektrodenhalter und somit langzeitig ein praktisch unterbrechungsfreies Punktschweißen erzielen.

Eine äquidistante Verteilung der Schweißelektroden in Drehrichtung der Elektrodenhalter ermöglicht einen sehr einfachen Aufbau der Schweißzange und ihres Bewegungsantriebs.

Miteinander im jeweiligen Zangenarm und im zugeordneten Elektrodenhalter strömungsverbundene Kühlkanäle, die bis in unmittelbare Nähe der Schweißelektroden reichen können und von einem Kühlmittel durchströmbar sind, gewährleisten dank einer in allen Betriebszuständen wirksamen Abdichtung nach außen eine Kühlung der Schweißelektroden, und zwar auch während des Weiter-Drehschaltens der Elektrodenhalter.

Die Schweißelektroden sind hochverschleißfest ausgebildet. Sie können integrierte Bestandteile des Elektrodenhalters oder daran separat lösbar gehaltert sein. Daher lassen sie sich in Form und Material den jeweiligen Einbauverhältnissen und Betriebsbedingungen anpassen.

Anspruch 11 definiert die besonders vorteilhafte Ausgestaltung, daß die Elektrodenhalter kreisrunde oder mehreckige Elektrodenscheiben mit mehreren über ihren Umfang verteilten, nach außen vorstehenden Schweißelektroden aufweisen, wobei jeder Elektrodenhalter und der zugehörige Zangenarm durch koaxial ineinandergreifende, zylindrische Bereiche in ständigem elektrischem Kontakt stehen und stufenweise bzw. rastend drehbar verbunden sind. Das ergibt eine besonders kompakte, stabile und praktische Bauform. Dabei ist eine einfache konzentrische Drehführung möglich, z.B. ein Vorsprung am Elektrodenhalter, der in einer zylindrischen Vertiefung des zugeordneten Zangenarms sitzt, und/oder eine federbelastete zentrische Schraubverbindung. Stirnseitig können am Elektrodenhalter axiale Lagerfixierbohrungen ringförmig verteilt sein, in die jeweils ein Paßstift des benachbarten Zangenarms einführbar ist, wenn der Elektrodenhalter axial gegen Federkraft etwas axialverlagert und in eine nächste Schwenkstufe vorgedreht wird.

Vor allem ringförmige Kühlkanäle können bis in unmittelbare Nähe der Schweißelektroden reichen. Das gewährleistet ein ständiges, intensives Kühlen der erhitzten Teile, und zwar dank ständig wirksamer Ringdichtungen unter dauernder Dichtigkeit in allen Betriebszuständen.

Alternativ kann der bzw, jeder Elektrodenhalter auch strahlenförmig mit je einer Schweißelektrode an den Strahlenenden ausgebildet sein. Eine solche Bauform ist vor allem günstig, wenn der Elektrodenhalter nur wenige Schweißelektroden trägt, z.B. drei.

Separat ausgebildete, vom Elektrodenhalter lösbare Schweißelektroden können insbesondere dann vorteilhaft sein, wenn hierfür besonders teuere und/oder schwer bearbeitbare Materialien eingesetzt werden.

Ebene Schweißoberflächen der Schweißelektroden sind zweckmäßig mit einer einfachen, z.B. linear beweglichen Schleifvorrichtung bearbeitbar, insbesondere nachschleifbar.

Mit einer anderen Weiterbildung, wobei die Zangenarme mit einem Zangenantrieb verbunden sind, der längs der zu verschweißenden Blechflansche an eiene schrittweise bewegbaren Roboter anschließbar ist und sowohl die Zangenbewegungen als auch die Drehverstellung der Elektrodenhalter ermöglicht, kann man die Schweißzange besonders gut in einen automatischen Betriebsablauf integrieren.

Weitere Einzelheiten, Merkmale und Vorteile der Erfindung ergeben sich aus den nachfolgend erläuterten Ausführungsbeispielen anhand der Zeichnung. Darin zeigen:
- Fig. 1: eine vereinfachte Teilschnittansicht eines ersten Schweißzangenabschnitts einer zweiarmigen Schweißzange mit integrierten Schweißelektroden,
- Fig. 2: eine auseinandergezogene Schrägansicht der Bestandteile des Schweißzangenabschnitts von Fig. 1,
- Fig. 3: eine vereinfachte Teilseitenansicht einer aus zwei Schweißzangenabschnitten gemäß Fig. 1 und 2 bestehenden Schweißzange im Betriebszustand,
- Fig. 4: eine auseinandergezogene Schrägansicht der Bestandteile eines Schweißzangenabschnitts einer anderen Bauform einer zweiarmigen Schweißzange mit separaten Schweißelektroden,
- Fig. 5: eine Axialschnittansicht des zusammengebauten Schweißzangenabschnitts von Fig. 4,
- Fig. 6: eine vereinfachte Teilseitenansicht eines schmalen Flansches mit länglicher Schweißfläche im Vergleich zu einer herkömmlichen Punktschweißfläche,
- Fig. 7: eine schematisierte Seitenschrägansicht einer vollständigen Schweißzange und einer zwischen Schweißelektroden mit ebener Schweißoberfläche angreifenden Schleifvorrichtung,
- Fig. 8: eine auseinandergezogene Schrägansicht der Bestandteile des Schweißzangenabschnitts von Fig. 8 und
- Fig. 9: eine Axialschnittansicht des zusammengebauten Schweißzangenabschnitts gemäß Fig. 8.

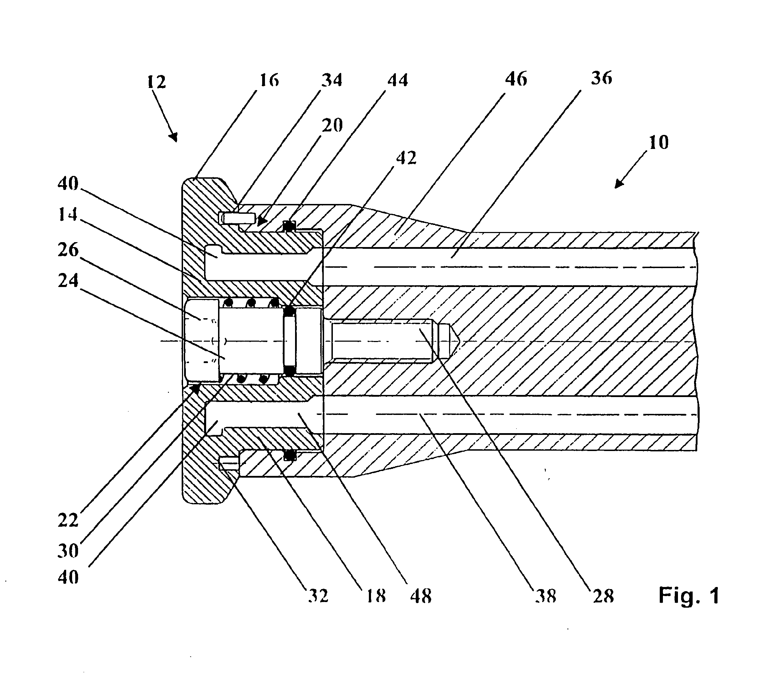

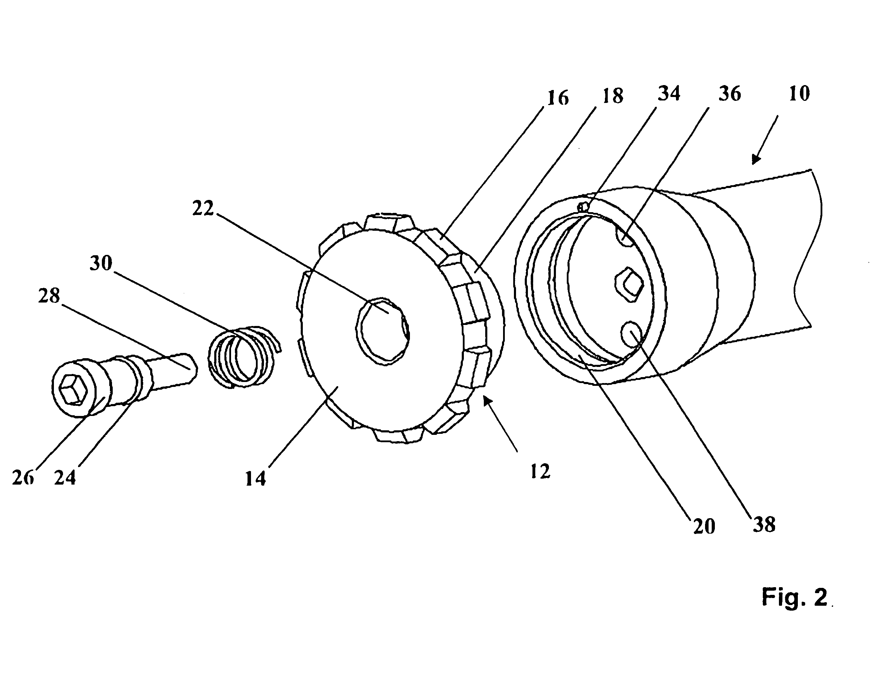

In Fig. 1 und 2 ist ein allgemein mit 10 bezeichneter Zangenarm, der rechts mit einem (nicht dargestellten) Zangenantrieb zu verbinden ist, an seiner entgegengesetzten Seite (links) mit einem Elektrodenhalter 12 konzentrisch ineinandergreifend verbunden. Der Elektrodenhalter 12 weist bei dieser Bauform eine kreisförmige Elektrodenscheibe 14 auf, die an ihrer Rückseite (rechts) in einen durchmesserverjüngten, axialen, zylindrischen Vorsprung 18 übergeht. Dieser greift paßgenau in eine zylindrische Aufnahmevertiefung 20 im Bereich eines Ringkörpers 46 des Zangenarms 10 ein.

Die Elektrodenscheibe 14 und der Vorsprung 18 haben einen zentralen abgestuften Durchbruch 22, durch den eine Schraube 24 greift. Ihr Schraubenkopf 26 ist in der Elektrodenscheibe 14 des Elektrodenhalters 12 versenkt und ihr Schraubengewinde 28 greift in eine in die Aufnahmevertiefung 20 mündende Gewindebohrung des Zangenarms 10 ein. Die Schraube 24 ist von einer im Einbauzustand vorgespannten Druckfeder 30 umgeben, die sich zwischen dem Schraubenkopf 26 und einem Absatz des Durchbruchs 22 abstützt. Die Druckfeder 30 drückt den Elektrodenhalter 12 axial gegen den Zangenarm 10, um hierdurch einen mechanischen und elektrischen Kontakt zwischen diesen Teilen herzustellen. Dabei kommen der Vorsprung 18 mit der Begrenzung der Aufnahmevertiefung 20 und/oder die Rückseite der Elektrodenscheibe 14 mit dem Ringkörper 46 an der Vorderseite des Zangenarms 10 in Berührung.

Am Umfang der gegenüber dem Zangenarm 10 stufen- bzw. schrittweise drehbaren Elektrodenscheibe 14 befindet sich eine Anzahl von radial vorstehenden, mit der Elektrodenscheibe 14 integriert bzw. einstückig ausgebildeten Schweißelektroden 16. Diese sind über den Umfang der Elektrodenscheibe 14äquidistant verteilt und können im Bedarfsfall durch rastendes Weiterdrehen der Elektrodenscheibe 14 in Schweißposition gebracht werden. Die einzelnen Drehpositionen des Elektrodenhalters 12 bzw. der Elektrodenscheibe 14 werden im vorliegenden Beispiel von einem stirnseitig axial vorstehenden Paßstift 34 des Zangenarms 10 vorgegeben, der in jeweils einen von umfangsmäßig verteilten, axialen, stirnseitigen Lagefixierbohrungen 32 des Elektrodenhalters 12 eingreifen kann. Zum Verdrehen des Elektrodenhalters 12 muß dieser zunächst relativ zum Zangenarm 10 verlagert werden, wobei die Druckfeder 30 weiter verspannt wird und der Paßstift 34 die momentane Lagefixierbohrung 32 freigibt. Nach erfolgtem Verdrehen kann eine neu positionierte Lagefixierung erfolgen. Zum Entriegeln der Drehfixierung ist es möglich, daß ein geeigneter Zangenantrieb den Elektrodenhalter 12 axial fixiert und den Zangenarm 10 nach rechts zieht, damit man diesen oder den Elektrodenhalter 12 schrittweise verdrehen kann.

Gemäß Fig. 1 und 2 weist der Zangenarm 10 für ein geeignetes Kühlmittel einen zulaufseitigen Versorgungskanal 36 und einen rücklaufseitigen Versorgungskanal 38 auf. Diese Versorgungskanäle 36, 38 münden in einen Ringraum 48, der sich als Bestandteil eines Kühlkanals 40 bis in unmittelbare thermische Nähe der Schweißelektroden 16 erstreckt. Das ermöglicht eine wirksame Kühlung der Schweißelektroden 16, insbesondere der gerade im Punktschweißbetrieb benutzten Schweißelektrode. Zwei Ringdichtungen 42, 44 sorgen dafür, daß der Kühlmittelkreislauf ständig abgedichtet bleibt, und zwar auch beim stufenweisen Weiterdrehen des Elektrodenhalters 12. Die Ringdichtung 44 ist zwischen der Aufnahmevertiefung 20 und dem Vorsprung 18 angeordnet, während sich die Ringdichtung 42 zwischen der Schraube 24 und dem Durchbruch 22 befindet.

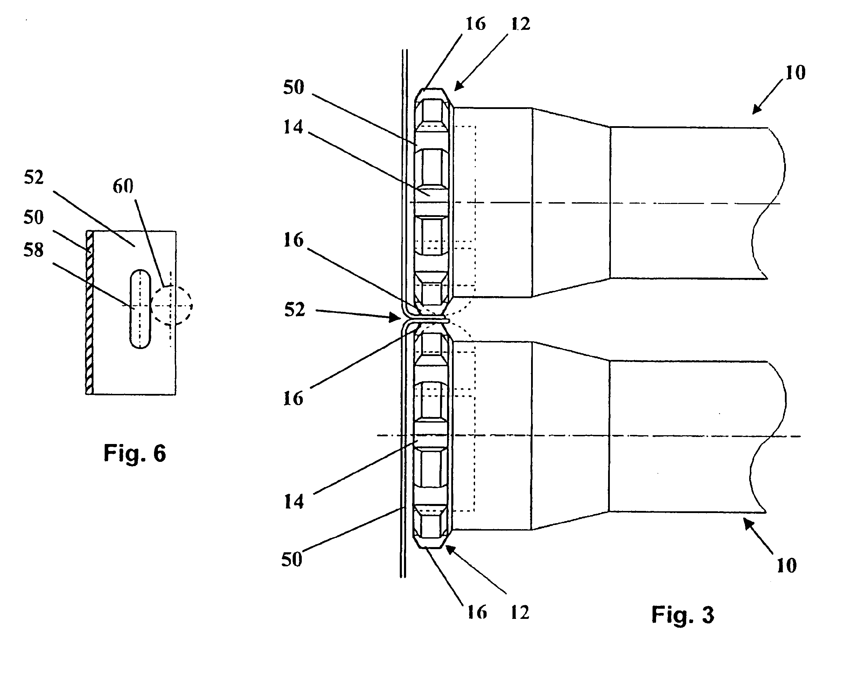

Gemäß Fig. 3 besitzt eine Schweißzange jeweils zwei im Schweißbetrieb zumindest vorderseitig etwa parallele Zangenarme 10 mit je einem schrittweise drehbaren Elektrodenhalter 12. Im Punktschweißbetrieb, also bei zusammengepreßten Zangenarmen 10, drücken jeweils zwei Schweißelektroden 16 am Umfang der beiden Elektrodenscheiben 14 mit ebenen Schweißoberflächen gegen das Schweißgut, das im gezeichneten Beispiel von sich gegenseitig berührenden schmalen Blechflanschen 52 gebildet wird, die von zu verbindenden Blechen 50 abgewinkelt sind. In Fig. 2 und 3 sind die Schweißelektroden 16 im Querschnitt rechteckig bzw. länglich ausgebildet und am freien Rand der Elektrodenscheibe 14 so angeordnet, daß ihre Längsseiten in deren Umfangsrichtung verlaufen. Somit ist es möglich, bei ausreichend großer Schweiß- bzw. Elektrodenfläche besonders schmale Blechflansche zu schweißen, was im Zusammenhang mit Fig. 6 noch näher erläutert wird.

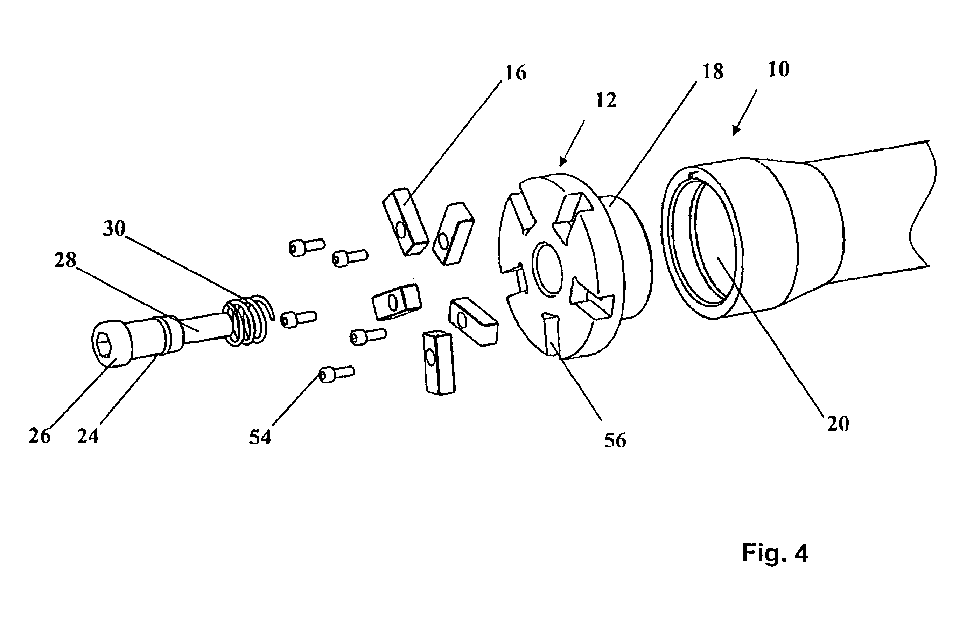

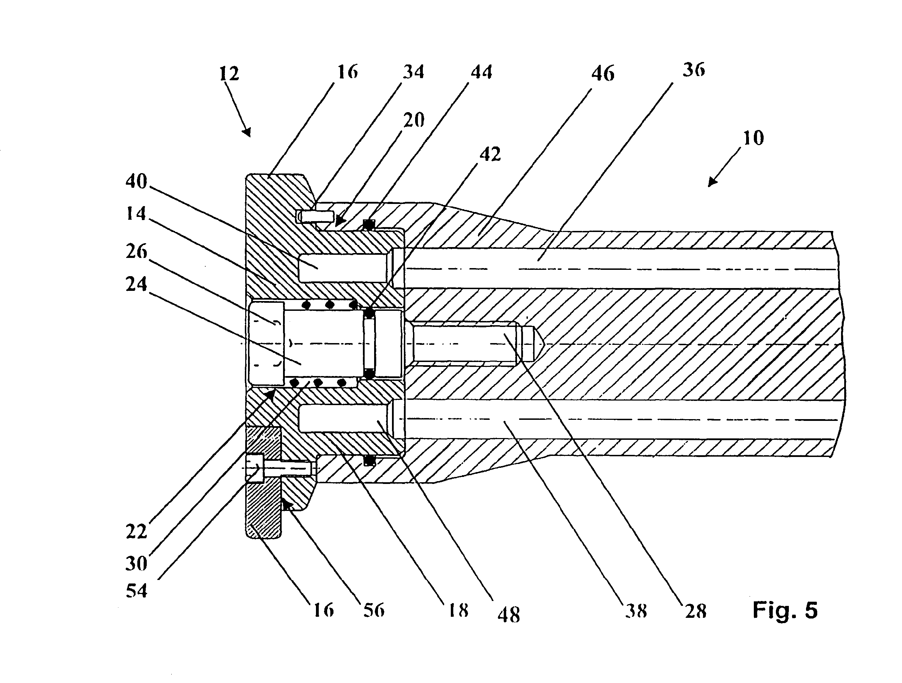

Eine zweite Ausführungsform der Schweißzange nach Fig. 4 und 5 unterscheidet sich von der ersten Bauform dadurch, daß die im Querschnitt quadratischen oder rechteckigen Schweißelektroden 16 als separate Teile ausgebildet und in peripher verteilte, vorderseitige Aufnahmevertiefungen 56 der Elektrodenscheibe 14 des Elektrodenhalters 12 eingesetzt und dort durch Schrauben 54 fixiert sind. Wiederum reicht der Kühlkanal 40 mit seinem Ringraum 48 bis nahe an die Schweißelektroden 16 heran. Diese können vorteilhaft aus einem anderen Material als der Elektrodenhalter 12 bestehen, das schweißtechnisch besonders geeignet ist, gegebenenfalls sehr teuer sein kann und schwer zu bearbeiten ist. Zum Schweißen schmaler Flansche ist es auch hier bevorzugt, daß die Schweißelektroden 16 im Querschnitt länglich ausgebildet sind und daß sich ihre Längsseiten in Umfangsrichtung des Elektrodenhalters 12 erstrecken.

Üblicherweise werden zum Schweißen von Blechflanschen 52 im Querschnitt kreisrunde Schweißelektroden eingesetzt, die aber zum Schweißen schmaler Blechflansche ungeeignet sind. Fig. 6 zeigt bei einem abgewinkelten schmalen Blechflansch 52 eines Blechs 50 zum Vergleich einerseits eine längliche Schweißfläche 58 (Schweißpunkt) einer erfindungsgemäßen, im Querschnitt länglichen Schweißelektrode 16 und andererseits - gestrichelt - einen flächenmäßig gleichgroßen, jedoch kreisrunden Schweißfleck 60, der mit einer herkömmlichen runden, üblicherweise stirnseitig gewölbten Schweißelektrode hergestellt wird. Es ist unmittelbar zu sehen, daß es mit einer an der Elektrodenscheibe 14 randseitig angeordneten länglichen, ebenen Schweißelektrode 16 möglich ist, wesentlich schmalere Blechflansche 52 zu verschweißen, weil sie deutlich näher an die zu verbindenden Bleche 50 heranführbar ist. Ein Verschweißen mit einer vergleichbaren kreisrunden, gewölbten Schweißelektrode würde (wie gestrichelt angedeutet) dazu führen, daß der Schweißfleck 60 in unzulässiger, instabiler Weise in den freien Randbereich der Blechflansche 52 gelangt.

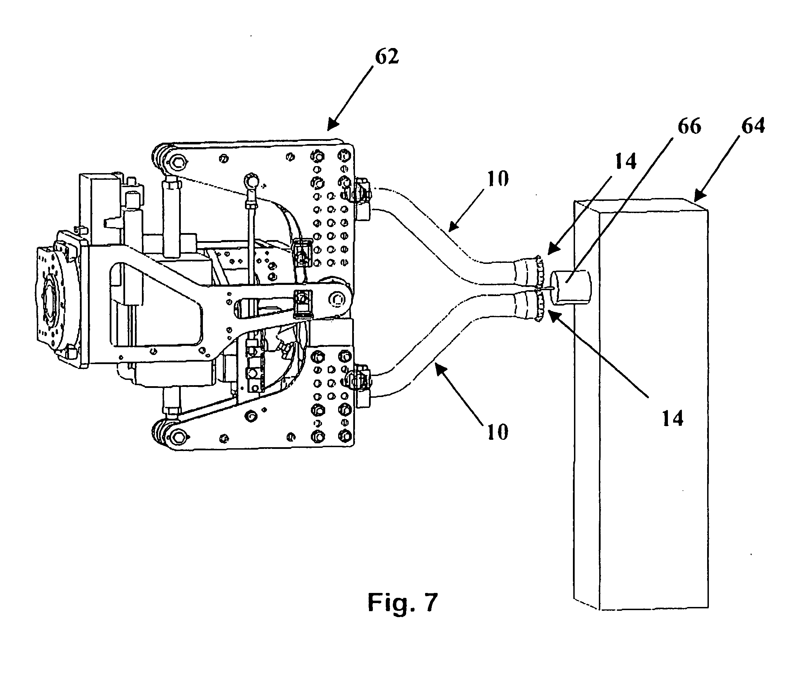

Im Beispiel der Fig. 7 erkennt man an den Elektrodenhaltern 12 bzw. Elektrodenscheiben 14 Schweißelektroden 16 mit ebenen Schweißoberflächen, die in einem einzigen gesonderten Arbeitsgang mit einer linear beweglichen Schleifvorrichtung 64 einfach, schnell und preiswert nachbearbeitbar sind. Ein Schleifmittel oder ein Fräser eines Schleifkopfes 66 der Vorrichtung 64 greift in den Spalt zwischen zwei einander gegenüberliegenden Schweißelektroden 16 und wird während des Schleifvorgangs über die Schweißoberflächen bewegt.

Aus Fig. 7 geht ferner ein Zangenantrieb 62 hervor, der daran gehaltene Zangenarme 10 bewegen kann, um den Abstand zwischen benachbarten Schweißelektroden 16 der beiden Elektrodenhalter 12 bzw. Elektrodenscheiden 14 zu verändern. Der Antrieb kann außerdem für ein (nicht dargestelltes) schrittweises Fortschalten der benachbarten Schweißelektroden 16 jeder Scheibe 14 sorgen, z.B. indem er die Elektrodenhalter 12 axial fixiert, die Zangenarme unter Spannung der Druckfedern 30 axial zurückzieht, die Elektrodenhalter 12 samt den Scheiben 14 verdreht bzw. verschwenkt und die ursprüngliche axiale Position wiederherstellt. Das ermöglicht es, beim Punktschweißen ohne nennenswerte Arbeitsunterbrechung einen schnellen Austausch der aktiven Schweißelektroden durch noch unverbrauchte Schweißelektroden 16 vorzunehmen. Dieser Vorgang erleichtert und beschleunigt auch ein Schleif-Nachbearbeiten aller Schweißelektroden 16.

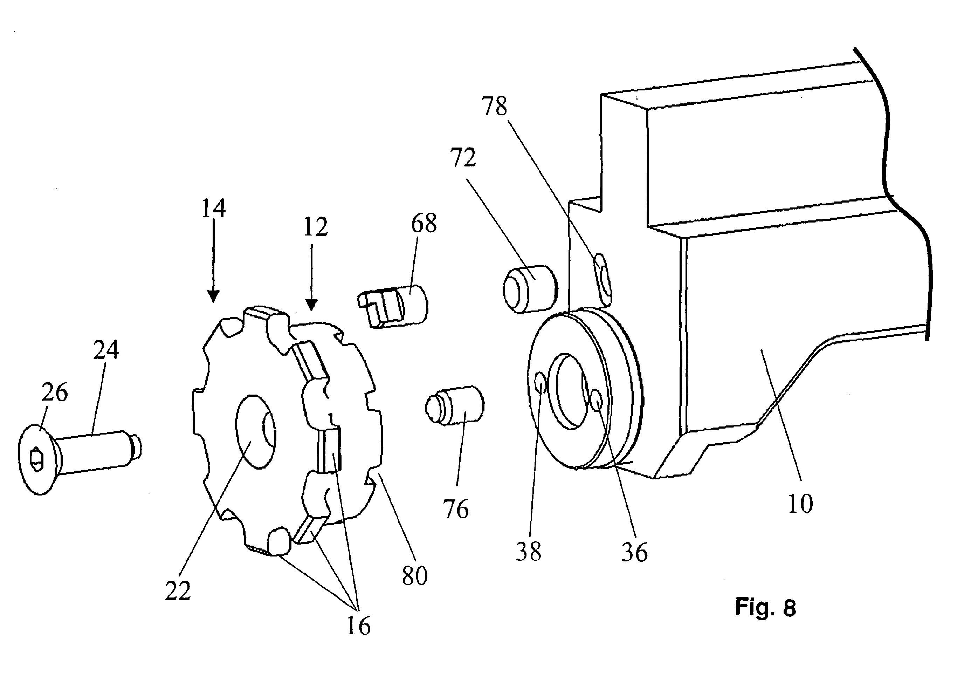

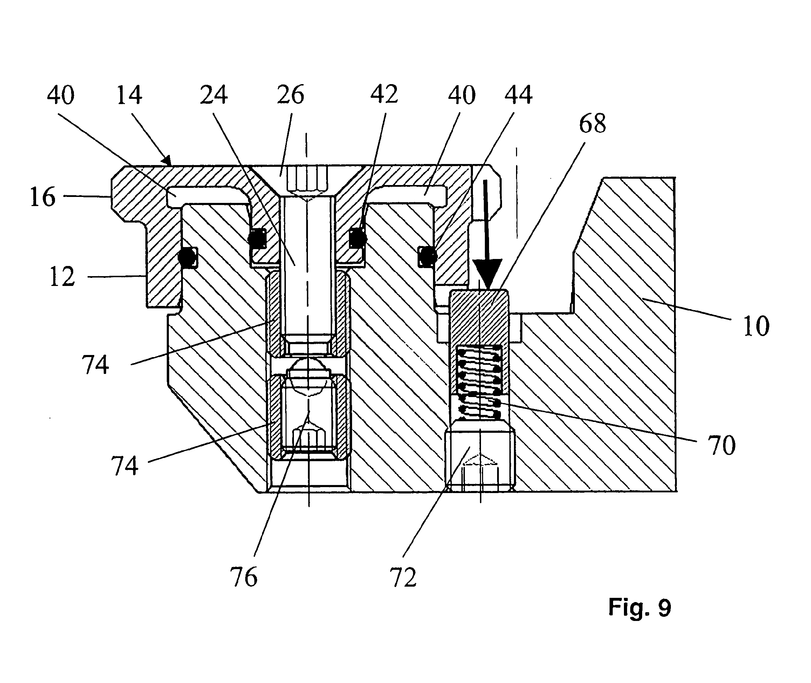

Bei einer weiteren Bauform gemäß Fig. 8 und 9 sitzt der Elektrodenhalter 12 übergreifend auf dem Zangenarm 10, anstatt darin zu stecken. Diese konstruktive Vereinfachung geht einher mit einer sehr bequemen Weiterschaltung der Einzelelektroden 16. Wie Fig. 9 verdeutlicht, wird zum Entrasten ein Raststift 68 in Pfeilrichtung von außen um die Tiefe der radialen Lagefixierschlitze 80 (Fig. 8) eingedrückt, so daß der Elektrodenhalter 12 freigegeben wird und samt der Scheibe 14 weitergedreht werden kann, bis der Raststift 68 unter der mittels einer Stellschraube 72 einstellbaren Kraft seiner Druckfeder 70 in den nächsten Schlitz 80 einfällt. Man erkennt, daß es hierbei nicht notwendig ist, den Elektrodenhalter 12 axial zu bewegen. Um ihn verdrehen zu können, muß lediglich etwas Spiel zwischen dem Zangenarm 10 und dem Elektrodenhalter 12 vorhanden sein, was durch einen Druckstift 76 (Fig. 9) einstellbar ist, der sich an der Schraube 24 abstützt. Diese hat dazu an ihrem inneren Ende einen gehärteten Ansatz.

Der bzw. jeder Zangenarm 10 besteht allgemein aus Kupfer, d.h. aus einem relativ weichen Material. Seine Lebensdauer wird verlängert, wenn die Halterung des bzw. jedes Elektrodenhalters 12 durch Stahl-Gewindeeinsätze 74 unterstützt wird, in welche einerseits die Schraube 24 und andererseits der Stellstift 76 eingreift.

### Bezugszeichenliste

- 10: Zangenarm
- 12: Elektrodenhalter
- 14: Elektrodenscheibe
- 16: Schweißelektroden
- 18: zylindrischer Vorsprung (von 12)
- 20: Aufnahmevertiefung (in 10)
- 22: Durchbruch (in 12)
- 24: Schraube
- 26: Schraubenkopf
- 28: Gewinde
- 30: Druckfeder
- 32: Lagefixierbohrungen
- 34: Paßstift
- 36: zulaufseitiger Versorgungskanal
- 38: rücklaufseitiger Versorgungskanal
- 40: Kühlkanal
- 42: Ringdichtungen
- 44: Ringdichtungen
- 46: Ringkörper
- 48: Ringraum
- 50: zu verbindende Bleche
- 52: Blechflansche
- 54: Schrauben
- 56: Aufnahmevertiefungen
- 58: länglicher Schweißpunkt (neu)
- 60: kreisrunder Schweißpunkt (alt)
- 62: Zangenantrieb
- 64: Schleifvorrichtung
- 66: Schleifkopf
- 68: Raststift
- 70: Feder (für 70)
- 72: Stellschraube
- 74: Gewindeeinsätze
- 76: Druckstift
- 78: Raststift-Aufnahme
- 80: Lagefixierschlitze

## Patentansprüche

1. Schweißzange zum elektrischen Punktschweißen von sich überlappenden und elektrisch berührenden Blechflanschen mit zwei relativ zueinander beweglichen, elektrisch leitenden Zangenarmen (10), an deren freien Enden elektrisch leitende Elektrodenhalter (12) mit im Schweißbetrieb die zu verschweißenden Blechflansche (52) beidseitig berührenden Schweißelektroden (16) gehalten sind, wobei jeder Elektrodenhalter (12) stufenweise drehbar gehalten ist und wenigstens zwei in Drehrichtung versetzt angeordnete Schweißelektroden (16) aufweist, wobei in jeder Drehstufe der Elektrodenhalter (12) jeweils zwei in Schweißposition befindliche Schweißelektroden (16) der beiden Elektrodenhalter (12) einander benachbart sind, **dadurch gekennzeichnet, daß** die an den freien bzw. vorderseitigen Rand des Elektrodenhalters (12) angrenzenden Schweißelektroden (16) jeweils längliche Querschnitte aufweisen und daß sich ihre Längsseiten in Drehrichtung der Elektrodenhalter (12) erstrecken.

2. Schweißzange nach Anspruch 1, **dadurch gekennzeichnet, daß** die Drehachsen der Elektrodenhalter (12) zumindest im Schweißbetrieb etwa parallel zueinander und rechtwinklig zur Längserstreckung der zu verschweißenden Blechflansche (52) ausgerichtet sind.

3. Schweißzange nach Anspruch 1 oder 2, **dadurch gekennzeichnet, daß** jeweils mehr als zwei Schweißelektroden (16) in Drehrichtung eines jeden Elektrodenhalters (12) verteilt angeordnet sind und daß die Elektrodenhalter (12) zwischen in Drehrichtung benachbarten Schweißelektroden (16) stufenweise drehverstellbar sind.

4. Schweißzange nach einem der Ansprüche 1 bis 3, **dadurch gekennzeichnet, daß** die Schweißelektroden (16) in Drehrichtung der Elektrodenhalter (12) äquidistant verteilt angeordnet sind.

5. Schweißzange nach einem der Ansprüche 1 bis 4, **dadurch gekennzeichnet, daß** jeder Zangenarm (10) und der dazugehörige Elektrodenhalter (12) in ständiger gegenseitiger Strömungsverbindung stehende Kühlkanäle (36, 38, 40) aufweisen, die von einem Kühlmittel durchströmbar und in allen Betriebszuständen nach außen abgedichtet sind.

6. Schweißzange nach Anspruch 5, **dadurch gekennzeichnet, daß** die Kühlkanäle (40) des Elektrodenhalters (12) bis in unmittelbare Nähe der Schweißelektroden (16) verlaufen.

7. Schweißzange nach einem der Ansprüche 1 bis 6, **dadurch gekennzeichnet, daß** die Schweißelektroden (16) als hochverschleißfeste integrierte Bestandteile des Elektrodenhalters (12) ausgebildet sind.

8. Schweißzange nach einem der Ansprüche 1 bis 6, **dadurch gekennzeichnet, daß** die Schweißelektroden (16) als hochverschleißfeste separate Bestandteile ausgebildet und an dem Elektrodenhalter (12) lösbar gehalten sind.

9. Schweißzange nach einem der Ansprüche 1 bis 8, **dadurch gekennzeichnet, daß** die Querschnitte der Schweißelektroden (16) in Drehrichtung der Elektrodenhalter (12) etwa langgestreckt rechteckig ausgebildet sind.

10. Schweißzange nach einem der Ansprüche 1 bis 8, **dadurch gekennzeichnet, daß** die Querschnitte der Schweißelektroden (16) in Drehrichtung der Elektrodenhalter (12) etwa langgestreckt oval oder elliptisch ausgebildet sind.

11. Schweißzange nach einem der Ansprüche 1 bis 10, **dadurch gekennzeichnet, daß** jeder Elektrodenhalter (12) als eine kreisrunde oder mehreckige Elektrodenscheibe (14) mit mehreren über deren Umfang verteilten, nach außen vorstehenden Schweißelektroden (16) ausgebildet ist und daß jeder Elektrodenhalter (12) sowie der zugehörige Zangenarm (10) durch koaxial ineinandergreifende, zylindrische Bereiche (18, 46: 20) derselben in ständigem elektrischen Kontakt stehend stufenweise drehbar verbunden sind.

12. Schweißzange nach Anspruch 11, **dadurch gekennzeichnet, daß** der Elektrodenhalter (12) an einer Seite der Elektrodenscheibe (14) einen zentrisch angeordneten, zylindrischen, durchmesserverkleinerten Vorsprung (18) aufweist, der in eine diesen umfassende sowie haltende zylindrische Aufnahmevertiefung (20) im zugehörigen Zangenarm (10) eingreift, z.B. in einem Ringkörper (46).

13. Schweißzange nach Anspruch 11 oder 12, **dadurch gekennzeichnet, daß** der Elektrodenhalter (12) einen abgestuften zentrischen Durchbruch (22) aufweist, durch den sich mit Bewegungsspiel eine Schraube (24) erstreckt, deren Schraubenkopf (26) vollständig in dem Durchbruch (22) sitzt und deren Schraubengewinde (28) in ein Aufnahmegewinde des Zangenarms (10) eingreift, wobei eine die Schraube (24) umgebende, zwischen dem Schraubenkopf (26) und einem Absatz des Durchbruchs (22) eingespannte Druckfeder (30) den vorsprung (18) oder die Elektrodenscheibe (14) in einen mechanischen, elektrisch leitenden Kontakt gegen den Zangenarm (10) drückt.

14. Schweißzange nach einem der Ansprüche 11 bis 13, **dadurch gekennzeichnet, daß** die Drehstufen durch ringförmig verteilte axiale Lagefixierbohrungen (32) in benachbarten Stirnseiten des Elektrodenhalters (12), z.B. in dessen Elektrodenscheibe (14), oder des Zangenarms (10) und durch einen in diese Lagefixierbohrungen (32) einführbaren Paßstift (34) an der jeweils anderen Stirnseite des Zangenarms (10) oder des Elektrodenhalters (12) bzw. dessen Elektrodenscheibe (14) vorgegeben sind, und daß eine Veränderung der momentanen Schwenkstufe durch geringes axiales Verlagern des Elektrodenhalters (12) unter Spannung der Druckfeder (30), durch entsprechendes Verschwenken des Elektrodenhalters (12) bis zu der erwünschten neuen Schwenkstufe und durch Einführen des Paßstiftes (34) in die entsprechende Lagefixierbohrung (32) erfolgt.

15. Schweißzange nach einem der Ansprüche 11 bis 14, **dadurch gekennzeichnet, daß** der Elektrodenhalter (12) übergreifend drehbar auf dem Zangenarm (10) sitzt.

16. Schweißzange nach einem der Ansprüche 11 bis 15, **dadurch gekennzeichnet, daß** zum Entrasten ein Raststift (68) von außen um die Tiefe der radialen Lagefixierschlitze (80) eindrückbar ist, wodurch der Elektrodenhalter (12) freigegeben wird und samt der Elektrodenscheibe (14) weiterdrehbar ist, bis der Raststift (68) unter der mittels einer Stellschraube (72) einstellbaren Kraft einer Druckfeder (70) in den nächsten Schlitz (80) einfällt.

17. Schweißzange nach einem der Ansprüche 11 bis 16, **dadurch gekennzeichnet, daß** für die Halterung des bzw. jedes Elektrodenhalters (12) Stahl-Gewindeeinsätze (74) vorhanden sind, in welche einerseits die Schraube (24) und andererseits ein Stell- oder Druckstift (76) eingreift.

18. Schweißzange nach einem der Ansprüche 1 bis 17, **dadurch gekennzeichnet, daß** der Zangenarm (10) zwei axiale Versorgungskanäle (36, 38) zum Zuleiten und Ableiten eines Kühlmediums aufweist, daß diese Versorgungskanäle an der zum Elektrodenhalter (12) weisenden Stirnseite des Zangenarms (10) offen sind, daß in dem Elektrodenhalter (12) bis in unmittelbare Nähe der Schweißelektroden (16) führende ringförmige Kühlkanäle (40, 48) ausgebildet sind, die ständig mit den Versorgungskanälen (36, 38) in Strömungsverbindung stehen, und daß alle vom Kühlmedium durchströmbaren Kanäle (36, 38, 40, 48) in allen Betriebszuständen, einschließlich des stufenweisen Weiterdrehens des Elektrodenhalters (12), nach außen abgedichtet sind.

19. Schweißzange nach Anspruch 18, **dadurch gekennzeichnet, daß** zwischen der zentrischen Schraube (24) sowie der Innenseite des Vorsprungs (18) und zwischen der Außenseite des Vorsprungs (18) sowie dem Zangenarm (10) in ständigem Dichtungseingriff befindliche Ringdichtungen (42, 44) angeordnet sind.

20. Schweißzange nach einem der Ansprüche 1 bis 19, **dadurch gekennzeichnet, daß** der Elektrodenhalter (12) strahlenförmig mit je einer Schweißelektrode (16) an jedem Strahlenende ausgebildet ist.

21. Schweißzange nach einem der Ansprüche 1 bis 20, **dadurch gekennzeichnet, daß** separat ausgebildete, auswechselbare Schweißelektroden (16) in elektrisch sowie thermisch leitendem Kontakt mit dem Elektrodenhalter (12) an diesem durch Schrauben (54) lösbar gehalten sind.

22. Schweißzange nach einem der Ansprüche 1 bis 21, **dadurch gekennzeichnet, daß** alle Schweißelektroden (16) durch eine z.B. linear bewegliche Schleifvorrichtung (64, 66) nachbearbeitbare ebene Schweißoberflächen aufweisen.

23. Schweißzange nach einem der Ansprüche 1 bis 22, **dadurch gekennzeichnet, daß** die Zangenarme (10) mit einem Zangenantrieb (62) verbunden sind, der an einen längs der zu verschweißenden Blechflansche (52) schrittweise bewegbaren Roboter anschließbar ist und zum Durchführen einerseits der Zangenbewegungen und andererseits der stufenweisen Drehverstellungen der Elektrodenhalter (12) gegenüber den Zangenarmen (10) dient.

## Claims

1. Welding gun for electrical spot welding of plate flanges overlapping and electrically touching each other, with two electrically conducting gun arms (10) moveable relative to each other and at the free ends of which are attached electrically conducting electrode holders (12) with welding electrodes (16) that in welding operation touch on both sides the plate flanges (52) to be welded, with each electrode holder (12) being stepwise rotatable and with at least two welding electrodes (16) being offset-wise arranged on it in rotation direction, and where at each rotation step of the electrode holders (12) always two welding electrodes at a time (16) of the two electrode holders (12) are in welding position neighboring each other, **characterized in that** the welding electrodes (16) abutting the free respectively front edge of the electrode holder (12) are each of an oblong cross-section, and that their long sides stretch in rotation direction of the electrode holders (12).

2. Welding gun according to Claim 1, **characterized in that** the turning axes of the electrode holders (12) are at least in welding operation oriented about parallel to each other and rectangular to the longitudinal extension of the plate flanges (52) to be welded.

3. Welding gun according to Claim 1 or 2, **characterized in that** more than two welding electrodes (16) are arranged distributed in rotation direction of each electrode holder (12) and that the electrode holders (12) are stepwise rotatable between the in rotation direction neighboring welding electrodes.

4. Welding gun according to one of the Claims 1 to 3, **characterized in that** the welding electrodes (16) are arranged in equidistant distribution in rotation direction of the electrode holders (12).

5. Welding gun according to one of the Claims 1 to 4, **characterized in that** each gun arm (10) and the pertinent electrode holder (12) have cooling channels (36, 38, 40) in permanent reciprocal flow connection through which passes a coolant and are in all operating states sealed to the outside.

6. Welding gun according to Claim 5, **characterized in that** the cooling channels (40) of the electrode holder (12) run up to next to the welding electrodes (16).

7. Welding gun according to one of the Claims 1 to 6, **characterized in that** the welding electrodes (16) are formed as highly wear resistant integrated components of the electrode holder (12).

8. Welding gun according to one of the Claims 1 to 6, **characterized in that** the welding electrodes (16) are formed as highly wear resistant separate components attached detachably to the electrode holder (12).

9. Welding gun according to one of the Claims 1 to 8, **characterized in that** the cross-sections of the welding electrodes (16) are formed approximately oblong rectangular in rotation direction of the electrode holders (12).

10. Welding gun according to one of the Claims 1 to 8, **characterized in that** the cross-sections of the welding electrodes (16) are formed approximately oblong oval or elliptic in rotation direction of the electrode holders (12).

11. Welding gun according to one of the Claims 1 to 10, **characterized in that** each electrode holder (12) is formed as a circular or polygonal electrode disk (14) with several outwards-protruding welding electrodes (16) distributed over its periphery, and that each electrode holder (12) and the associated gun arm (10) are by their coaxially interlocking cylindrical sections (18; 46; 20) locked stepwise rotatable and in permanent electrical contact.

12. Welding gun according to Claim 11, **characterized in that** the electrode holder (12) has on one side of the electrode disk (14) a centrically arranged cylindrical diameter-diminished porter (18) that engages in an it enclosing and fixing cylindrical recessed receptacle (20) in the associated gun arm (10), e. g. in an annular body (46).

13. Welding gun according to Claim 11 or 12, **characterized in that** the electrode holder (12) has a stepped centric opening (22) through which reaches a screw (24) with free motion whose head is placed completely in the opening (22) and whose screw thread (28) engages in an inside thread of the gun arm (10), and that a pressure spring (30) around the screw (24) mounted between the screw head (26) and a step of the opening (22) mounted pressure spring (30) presses the porter (18) or the electrode disk (14) into a mechanical, electrically conducting contact against the gun arm (10).

14. Welding gun according to one of the Claims 11 to 13, **characterized in that** the rotation steps are given by axial retention bores (32) in circular distribution in neighboring faces of the electrode holder (12), e. g. in its electrode disk (14), or of the gun arm (10), and by an into these retention bores (32) insertable setpin (34) at the respective other side of the face of the gun arm (10) or of the electrode holder (12), respectively its electrode disk (14), and that a modification of the actual swiveling position is done by a slight axial dislocation of the electrode holder (12) by pressuring the pressure spring (30) by swinging the electrode holder (12) to the desired new swiveling position, and by inserting the setpin (34) into the respective retention bore (32).

15. Welding gun according to one of the Claims 11 to 14, **characterized in that** the electrode holder (12) is placed encompassing and rotatable on the gun arm (10).

16. Welding gun according to one of the Claims 11 to 15, **characterized in that** for unlocking a plunger pin (68) is from the outside impressible at the depth of the radial retention grooves (80), by which the electrode holder (12) is set free and can together with the electrode disk (14) be rotated on until the plunger pin (68) through the by a setscrew (72) adjustable force of a pressure spring plunges (70) into the next grove (80).

17. Welding gun according to one of the Claims 11 to 16, **characterized in that** for mounting the, respectively each, electrode holder (12) threaded inserts of steel are present into which engages the screw (24) as well as an adjusting- or pressure pin (76).

18. Welding gun according to one of the Claims 1 to 17, **characterized in that** the gun arm (10) has two axial supply channels (36, 38) to supply and let off a coolant, that these supply channels are open at the gun arm (10) front heading toward the electrode holder (12), that in the electrode holder (12) annular cooling channels (40, 48) are formed that reach until next to the welding electrodes (16) and that are in permanent flow connection with the supply channels (36, 38), and that all channels flown through by the coolant (36, 38, 40, 48) are sealed to the outside at all operating states including the stepwise rotation of the electrode holder (12).

19. Welding gun according to Claim 18, **characterized in that** between the centric screw (24) and the inside of the porter (18), and between the outside of the porter (18) and the gun arm (10) gaskets (42, 44) are arranged in constant sealing position.

20. Welding gun according to one of the Claims 1 to 19, **characterized in that** the electrode holder (12) is formed rayed with one welding electrode (16) at each ray end.

21. Welding gun according to one of the Claims 1 to 20, **characterized in that** separately formed replaceable welding electrodes (16) are detachably attached by screws (54) to the electrode holder (12) in electrically and thermally conducting contact with the same.

22. Welding gun according to one of the Claims 1 to 21, **characterized in that** all welding electrodes (16) have plane welding surfaces for post-treatment e. g. by a linearly moveable grinding device (64, 66).

23. Welding gun according to one of the Claims 1 to 22, **characterized in that** the gun arms (10) are connected to a gun drive (62) that is connectable to a robot moveable step-by-step alongside the plate flanges (52) to be welded, and that serves to execute the gun movements as well as the stepwise rotations of the electrode holders (12) relative to the gun arms (10).

## Revendications

1. Pince de soudage pour soudage à points électrique des brides en tôle chevauchantes et se touchant électriquement, avec deux bras de pince (10) mobiles l'un relativement à l'autre et à conductibilité électrique, et aux bouts libres desquels sont attachés des porte-électrodes (12) à conductivité électrique avec des électrodes de soudage (16) qui pendant le procédé de soudage touchent les deux côtés les brides en tôle (52) à souder, et par quoi chaque porte-électrode (12) est porté de manière rotative en gradins et montre au moins deux électrodes de soudage (16) arrangés de manière décalé en direction de rotation, et par quoi à chaque gradin de rotation des porte-électrodes (12) toujours deux des électrodes de soudage (16) des deux porte-électrodes (12) sont en position de soudage adjacentes, **caractérisée en ce que** les électrodes de soudage (16) avoisinant le bord libre, respectivement frontal du porte-électrode (12) sont chacun d'une coupe transversale oblong et que ces grands côtés s'étendent suivant le sens rotatif des porte-électrodes (12).

2. Pince de soudage selon la Revendication 1, **caractérisée en ce que** les axes de rotation des porte-électrodes (12) sont au moins pendant le procédé de soudage orientés presque parallèlement l'un à l'autre et rectangulairement à l'extension longitudinale des brides en tôle (52) à souder.

3. Pince de soudage selon la revendication 1 ou 2, **caractérisée en ce que** plus que deux électrodes de soudage (16) sont arrangées distribuées en sens de rotation de chacun des porte-électrodes (12), et que les porte-électrodes (12) sont rotatifs en gradins entre des électrodes de soudage (16) s'avoisinant au sens de rotation.

4. Pince de soudage selon une des revendications 1 à 3, **caractérisée en ce que** les électrodes de soudage (16) sont arrangées en distribution équidistante en sens rotatif des porte-électrodes (12).

5. Pince de soudage selon une des Revendications 1 à 4, **caractérisée en ce que** chaque bras de pince (10) et son porte-électrode appartenant (12) ont des canaux de refroidissement (36, 38, 40) en permanente connexion d'écoulement réciproque qui sont passés à travers par un réfrigérant et étanchés vers l'extérieur dans tout état de marche.

6. Pince de soudage selon la Revendication 5, **caractérisée en ce que** les canaux de refroidissement (40) du porte-électrode (12) passent jusqu'à la proximité des électrodes de soudage (16)

7. Pince de soudage selon une des Revendications 1 à 6, **caractérisée en ce que** les électrodes de soudage (16) sont formés comme des composants très résistants à l'usure et intégrés du porte-électrode (12).

8. Pince de soudage selon une des Revendications 1 à 6, **caractérisée en ce que** les électrodes de soudage (16) sont formés comme des composants très résistants à l'usure et attachées de manière détachable au porte-électrode (12).

9. Pince de soudage selon une des Revendications 1 à 8, **caractérisée en ce que** les coupes transversales des électrodes de soudage (16) sont en sens rotatif des porte-électrodes (12) d'une forme approximativement oblong et rectangulaire.

10. Pince de soudage selon une des Revendications 1 à 8, **caractérisée en ce que** les coupes transversales des électrodes de soudage (16) sont en sens rotatif des porte-électrodes (12) d'une forme approximativement oblong, ovale, ou elliptique.

11. Pince de soudage selon une des Revendications 1 à 10, **caractérisée en ce que** chaque porte-électrode (12) est formée comme un disque d'électrodes (14) circulaire ou polygone avec plusieurs électrodes de soudage (16) distribuées sur sa périphérie et avançant vers l'extérieur, et que chaque porte-électrode (12) et son bras de pince (10) appartenant sont par ses segments cylindriques (18 ; 46 ; 20) s'emmanchant de manière coaxiale reliés l'un à l'autre de manière rotative en gradins et en permanent contact électrique.

12. Pince de soudage selon la Revendication 11, **caractérisée en ce que** le porte-électrode (12) présente à un côté du disque d'électrodes (14) une portée (18) cylindrique diminué en diamètre et centralement placée, qui s'engage dans une cavité de logement (20) cylindrique l'entourant et le fixant, qui se trouve dans le bras de pince (10), par exemple un corps annulaire (46).

13. Pince de soudage selon la Revendication 11 ou 12, **caractérisée en ce que** le porte-électrode (12) a un centrique percement gradué (22) passé avec jeu par une vis (24) dont la tête (26) loge entièrement dans le percement (22) et dont le filetage (28) s'engage dans un filetage d'accueil du bras de pince (10), et qu'un ressort de pression (30) autour de la vis (24) tenu entre la tête de vis (26) et un gradin du percement (22) presse la portée (18) ou le disque d'électrodes (14) dans un contact mécanique et conducteur électrique contre le bras de pince (10).

14. Pince de soudage selon une des Revendications 11 à 13, **caractérisée en ce que** les gradins de rotation sont donnés par des forures de rétention (32) axiales en distribution circulaire dans les faces adjacentes du porte-électrode (12), par exemple dans son disque d'électrodes (14), ou du bras de pince (10), et par une goupille de serrage (34) insérable dans ces forures de rétention (32) qui se trouve à l'autre face du bras de pince (10), ou du porte-électrode (12), respectivement son disque d'électrodes, et que la modification de la position d'orientation actuelle est faite par une faible dislocation axiale du porte-électrode (12) en mettant sous pression le ressort de pression (30) par balayage horizontal du porte-électrode (12) jusqu'à la nouvelle position d'orientation désirée, et par l'insertion par la goupille de serrage (34) dans le forure de rétention (32) respective.

15. Pince de soudage selon une des Revendications 11 à 14, **caractérisée en ce que** le porte-électrode (12) est posé de manière enveloppant et rotative sur le bras de pince (10).

16. Pince de soudage selon une des Revendications 11 à 15, **caractérisée en ce que** pour déverrouiller une broche d'arrêt 68) est de l'extérieur à presser jusqu'à la profondeur des rainures de rétention (80), pour ainsi débloquer le porte-électrode (12) et peut ensemble avec le disque d'électrodes orienté en avant jusque la broche d'arrêt plonge sous la force d'un ressort de pression (70) ajustable par une vis d'arrêt dans la rainure (80) suivante.

17. Pince de soudage selon une des Revendications 11 à 16, **caractérisée en ce que** pour l'attache du, respectivement de chaque porte-électrode (12) il y a des inserts filetés en fer (74) dans lesquels s'engage la vis (24) ainsi qu'une cheville de réglage ou de pression (76).

18. Pince de soudage selon une des Revendications 1 à 17, **caractérisée en ce que** le bras de pince (10) a deux canaux d'alimentation axiaux (36, 38) pour alimentation et évacuation d'un réfrigérant, que ces canaux d'alimentation sont ouverts à la face du bras de pince (10) montrant vers le porte-électrode (12), que dans le porte-électrode (12) sont formés des canaux de refroidissement (40, 48) annulaires qui passent jusqu'à la proximité des électrodes de soudage (16) et sont en connexion d'écoulement permanente avec les canaux d'alimentation (36, 38), et que tous les canaux passés par le réfrigérant (36, 38, 40, 48) sont dans tous leurs états de marche, y inclus la rotation en gradient du porte-électrode (12), étanchés vers l'extérieur.

19. Pince de soudage selon la Revendication 18, **caractérisée en ce que** sont arrangées entre la vis centrée (24) et la face intérieure de la portée (18), et entre la face extérieure de la portée (18) et le bras de pince (10) des garnitures (42, 44) en position d'étanchéité permanente.

20. Pince de soudage selon une des Revendications 1 à 19, **caractérisée en ce que** le porte-électrode (12) est formé rayonné avec une électrode de soudage (16) à chaque bout de rayon.

21. Pince de soudage selon une des Revendications 1 à 20, **caractérisée en ce que** des électrodes de soudage (16) remplaçables formées séparément sont attachées de manière détachable par des vis (24) au porte-électrode (12) et en contact conducteur électrique comme thermique avec ceci.

22. Pince de soudage selon une des Revendications 1 à 21, **caractérisée en ce que** toutes les électrodes de soudage (16) ont des surfaces de soudage planes pour retraitement par exemple par un appareil de meulage (64, 66) linéairement amovible.

23. Pince de soudage selon une des Revendications 1 à 22, **caractérisée en ce que** les bras de pince (10) sont connectés à une motorisation de pince (62) qui est connectable à un robot amovible pas à pas le long des plats en tôle (52) à souder, et qui sert à faire le mouvements de pince aussi que les rotations en gradins des porte-électrodes (12) relativement aux bras de pince (10).
